(19) Europäisches Patentamt
European Patent Office
Office européen des brevets

(11) **EP 1 788 315 A2**

(12) # EUROPEAN PATENT APPLICATION

(43) Date of publication:
**23.05.2007 Bulletin 2007/21**

(51) Int Cl.:
*F24F 1/00* (2006.01)  *F24F 3/16* (2006.01)

(21) Application number: **06023677.5**

(22) Date of filing: **14.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: 18.11.2005 JP 2005334989
29.11.2005 JP 2005343637
29.11.2005 JP 2005343645

(71) Applicant: **SANYO ELECTRIC CO., LTD.**
**Moriguchi-shi, Osaka 570-8677 (JP)**

(72) Inventors:
• **Fukushima, Toshio**
**Ota-shi**
**Gunma 373-0813 (JP)**
• **Usui, Hiroaki**
**Ora-gun**
**Gunma 370-0533 (JP)**
• **Koyama, Koji**
**Ota-chi**
**Gnuma 373-0815 (JP)**
• **Arakawa, Toru**
**Tatebayashi-shi**
**Gunma 374-0066 (JP)**
• **Tamura, Takaaki**
**Ora-gun**
**Gunma 370-0533 (JP)**
• **Takahashi, Kazuo**
**Ota-shi**
**Gunma 373-0036 (JP)**

• **Kurokawa, Keiko**
**Ora-gun**
**Gunma 370-0517 (JP)**
• **Suzuki, Daisuke**
**Ota-shi**
**Gunma 373-0817 (JP)**
• **Motegi, Masayuki**
**Ora-gun**
**Gunma 370-0601 (JP)**
• **Tsukamoto, Kenji**
**Ora-gun**
**Gunma 370-0532 (JP)**
• **Kuribara, Hiroyuki**
**Ota-shi**
**Gunma 373-0817 (JP)**
• **Kondo, Yasuhito**
**Ora-gun**
**Gunma 370-0514 (JP)**
• **Rakuma, Tsuyoshi**
**Ora-gun**
**Gunma 370-0524 (JP)**
• **Yamamoto, Tetsuya**
**Ota-shi**
**Gunma 373-0806 (JP)**
• **Minoshima, Haruki**
**Ora-gun**
**Gunma 370-0533 (JP)**

(74) Representative: **Glawe, Delfs, Moll**
**Patentanwälte**
**Postfach 26 01 62**
**80058 München (DE)**

(54) **On-floor mount type air filtering apparatus**

(57) An on-floor mount type air filtering apparatus for subjecting air to sterile infiltration to remove microorganisms suchasvirus, bacteria, etc. is equipped with a gas-liquid contact member (5) that is disposed in a housing (2) of the on-floor mount type air filtering apparatus (1) and formed of material having little reactivity to electrolytic water, an electrolytic water dropping unit (17, 5C) for dropping electrolytic water to the gas-liquid contact member (5), and an air blowing fan (7) for blowing indoor air to the gas-liquid contact member (5). The housing (2) has an air suction port (3) provided at the lower portion thereof and an air blow-out port (4) provided at the upper portion thereof, and the indoor air sucked from the air suction port (3) by the air blowing fan (7) is brought into contact with the electrolytic water dropped to the gas-liquid contact member (5) and blown out from the air blow-out port (4).

EP 1 788 315 A2

# FIG.5A

**Description**

BACKGROUND OF THE INVENTION

1. Field of the Invention

The present invention relates to a portable on-floor mount type air filtering apparatus that can remove (sterilize, inactivate or the like) bacteria, virus, etc. floating on air.

2. Description of the Related Art

As an apparatus for removing microorganisms such as bacteria, virus, etc. floating on air is known an air filtering apparatus using a filter in which virus, bacteria such as influenza virus, fungus, etc. (hereinafter referred to as "virus, etc.") floating on air are captured and these virus, etc. are inactivated or sterilized (hereinafter referred to as "broadly inactivate") as disclosed in JP-A-8-266828, for example. According to this air filtering apparatus, a filter impregnated with components extracted from tea is disposed, and virus, etc. captured by the filter are mainly inactivated or the like under the action of tea-polyphenol-based materials contained in the extracted components.

Likewise, there is also known a sterilizing apparatus for diffusing electrolytic water mist into air and bringing the electrolytic water mist into direct contact with microorganisms floating on air to inactivate virus, etc. (JP-A-2002-181358).

In the former sterilizing apparatus, however, the tea-polyphenol-based materials are oxidized and decomposed and thus gradually lost from the surface of the filter. Therefore, this filter gradually loses the function of broadly inactivating virus, etc. Therefore, when the filter is used for a long term, the virus, etc. which are once captured by the filter may fly in all directions again while they keep their activity.

Furthermore, the latter sterilizing apparatus becomes operative under such a use environment that particulate electrolytic water mist easily reach microorganisms, that is, in a relatively small space, however, it hardly becomes operative under such a use environment that the electrolytic water mist hardly reach microorganisms, that is, in a relatively large space such as a kindergarten, an elementary/junior high/ high school, long-term care insurance facilities, a hospital or the like.

SUMMARY OF THE INVENTION

Therefore, an object of the present invention is to overcome the foregoing problem, and also provide an on-floor mount type air filtering apparatus that can stably perform sterile filtration on air passing through a filter and also remove microorganisms such as virus, bacteria, fungus, etc. even in a large space.

In order to attain the above object, an on-floor mount type air filtering apparatus for subjecting air to sterile infiltration to remove microorganisms such as virus, bacteria, etc. is characterized by comprising: a gas-liquid contact member (5) that is disposed in a housing (2) of the on-floor mount type air filtering apparatus (1), and formed of material having little reactivity to electrolytic water; an electrolytic water dropping unit (17, 5C) for dropping electrolytic water to the gas-liquid contact member (5); and an air blowing fan (7) for blowing indoor air to the gas-liquid contact member (5), wherein the housing (2) has an air suction port (3) provided at the lower portion thereof and an air blow-out port (4) provided at the upper portion thereof, and the indoor air sucked from the air suction port (3) by the air blowing fan (7) is brought into contact with the electrolytic water dropped to the gas-liquid contact member (5) and blown out from the air blow-out port (4).

The on-floor mount type air filtering apparatus may further comprise an electrolytic water generating unit (31) that is equipped with electrodes and electrolyzes water by supplying current to the electrodes to generate electrolytic water containing active oxygen species.

In the on-floor mount type air filtering apparatus, the electrolytic water generating unit (31) may be equipped with a water supply tank (11) for stocking water for electrolytic water, and the water from the water supply tank is electrolyzed to generate electrolytic water.

In the on-floor mount type air filtering apparatus, the electrolytic water generating unit (31) may have a water pipe (81) for directly introducing tap water, and the tap water from the water pipe is electrolyzed to generate electrolytic water.

In the on-floor mount type air filtering apparatus, the active oxygen species may contain at least any material selected from the group consisting of hypochlorous acid, ozone and hydrogen peroxide.

In the on-floor mount type air filtering apparatus, the polarities of the electrodes may be inverted periodically or irregularly under a predetermined condition.

The on-floor mount type air filtering apparatus may comprises a water receiving tray (9) that is disposed below the gas-liquid contact member and receives electrolytic water passed through the gas-liquid contact member, and a circulating pump (13) for circulating electrolytic water stocked in the water receiving tray to the electrolytic water dropping unit.

In the on-floor mount type air filtering apparatus, the electrolytic water dropping unit may have electrodes (32, 33, 82, 83) for electrolyzing water and generate the electrolytic water, and the electrodes may be disposed between the outlet port of the circulating pump and the inlet port of the electrolytic water of the gas-liquid contact member.

In the on-floor mount type air filtering apparatus, the electrolytic water dropping unit may have electrodes for electrolyzing water and generating the electrolytic water, and the electrodes may be arranged in the water receiving tray (9) .

The on-floor mount type air filtering apparatus may further comprise a support tray (10) intercommunicating with the water receiving tray (9) so as to extend in the longitudinal direction of the water receiving tray (9), and a water supply tank (11) that is disposed on the support tray and supplies water to the circulating pump (13) and the support tray (11).

The on-floor mount type air filtering apparatus may further comprise an operation unit (41) and/or an electrical circuit board portion for carrying out various kinds of operations of the air filtering apparatus, wherein the circulating pump and the water supply tank are arranged at one end side of the housing and the operation portion and/or the electrical circuit board portion is disposed at the other end side of the housing.

In the on-floor mount type air filtering apparatus, the electrolytic water may contain active oxygen species, and the active oxygen species may contain at least any material selected from the group consisting of hypochlorous acid, ozone and hydrogen peroxide.

In the on-floor mount type air filtering apparatus, the polarities of the electrodes may be inverted periodically or irregularly under a predetermined condition.

In the on-floor mount type air filtering apparatus, the gas-liquid contact member may be formed of any material selected from the group consisting of polyolefin resin, PET resin, vinyl chloride resin, fluorinated resin, cellulose-based material and ceramics-based material.

In the on-floor mount type air filtering apparatus, the gas-liquid contact member may be subjected to a hydrophilic treatment.

In the on-floor mount type air filtering apparatus, the electrolytic water may contain active oxygen species achieved by electrolyzing water, and the active oxygen species may contain at least any material selected from the group consisting of hypochlorous acid, ozone and hydrogen peroxide.

In the on-floor mount type air filtering apparatus, the polarities of the electrodes may be inverted periodically or irregularly under a predetermined condition.

In the on-floor mount type air filtering apparatus, the gas-liquid contact member may be disposed on the lean in the housing.

In the on-floor mount type air filtering apparatus, the gas-liquid contact member may have a honeycomb structure.

According to the present invention, the indoor air sucked from the suction port provided to the lower portion of the housing is brought into contact with the electrolytic water dropped to the gas-liquid contact member, and then blown out from the air blow-out port provided to the upper portion of the housing. Therefore, the indoor air which is subjected to sterile filtration in contact with the electrolytic water can be blown out far away in the large space, and thus the sterile filtration of air can be efficiently performed in the large space.

Furthermore, the gas-liquid contact member is disposed on the lean in the housing, and thus the depth dimension of the housing can be more greatly reduced as compare with when the gas-liquid contact member is disposed horizontally, so that the on-floor mount type air filtering apparatus of this invention can be thinned.

Still furthermore, the gas-liquid contact member is formed of the material having little reactivity to the electrolytic water. Therefore, the durability of the gas-liquid contact member can be enhanced, and the lifetime thereof can be increased. The electrolytic water is supplied to the gas-liquid contact member in the dropping mode, and thus the electrolytic water can be uniformly infiltrated into the whole area of the gas-liquid contact member.

Still furthermore, according to the present invention, the electrolytic water dropping unit for dropping the electrolytic to the gas-liquid contact member and the water receiving tray that is disposed below the gas-liquid contact member and receives the electrolytic water passing through the gas-liquid crystal contact member are provided, and also the circulating pump for circulating the electrolytic water stocked in the water receiving tray to the electrolytic water dropping unit is provided. Therefore, the electrolytic water can be continuously supplied to the gas-liquid contact member through the electrolytic water dropping unit by the circulating pump, and the air is passed through the gas-liquid contact member, whereby the sterile filtration of air can be stably performed. Furthermore, by circulating the electrolytic water, the amount of water being used can be reduced. In addition, the electrolytic water is supplied in the dropping mode, and thus the electrolytic water can be uniformly infiltrated into the whole area of the gas-liquid contact member.

Still furthermore, the gas-liquid contact member is formed of any material of polyolefin-based resin, PET resin, vinyl chloride resin, fluorinated resin, cellulose-based material and ceramics-based material, and thus it has little reactivity to electrolytic water. Therefore, the durability of the gas-liquid contact member can be enhanced, and the lifetime can be increased.

BRIEF DESCRIPTION OF THE DRAWINGS

Fig. 1 is a perspective view showing an embodiment of an air filtering apparatus of the present invention;
Fig. 2 is a perspective view showing the internal construction of the air filtering apparatus of the embodiment shown in Fig. 1;
Fig. 3 is a longitudinally sectional view of a housing of the air filtering apparatus of Fig. 1;
Fig. 4 is a front view showing a gas-liquid contact member;
Figs. 5A to 5C are systematic diagrams showing a mechanism for dropping electrolytic water to the gas-liquid contact member, wherein Fig. 5A is a side view, Fig. 5B is a cross-sectional view of a water spraying box, and Fig. 5C is a diagram showing the construction of an electrolytic tank;

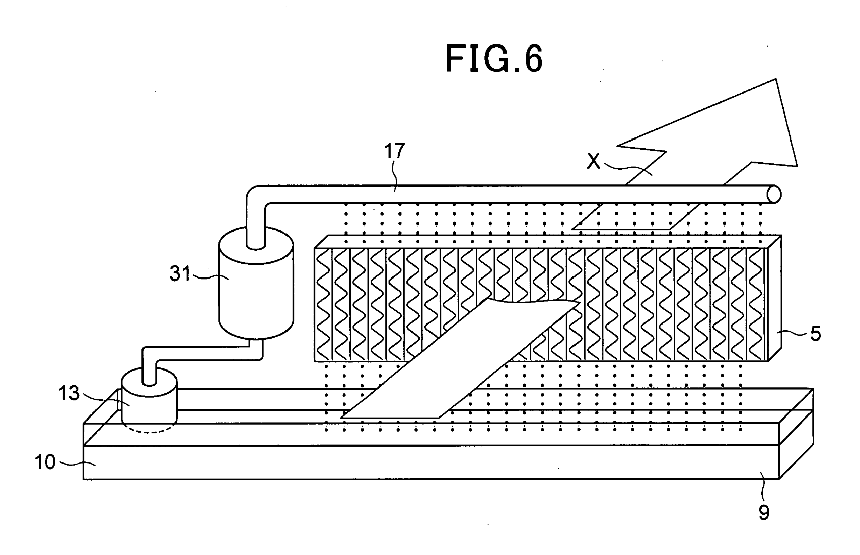

Fig. 6 is a diagram showing air cleaning; and
Fig. 7 is a diagram showing another embodiment of the air filtering apparatus.

DETAILED DESCRIPTION OF THE PREFERRED EMBODIMENTS

Preferred embodiments according to the present invention will be described hereunder with reference to the accompanying drawings.

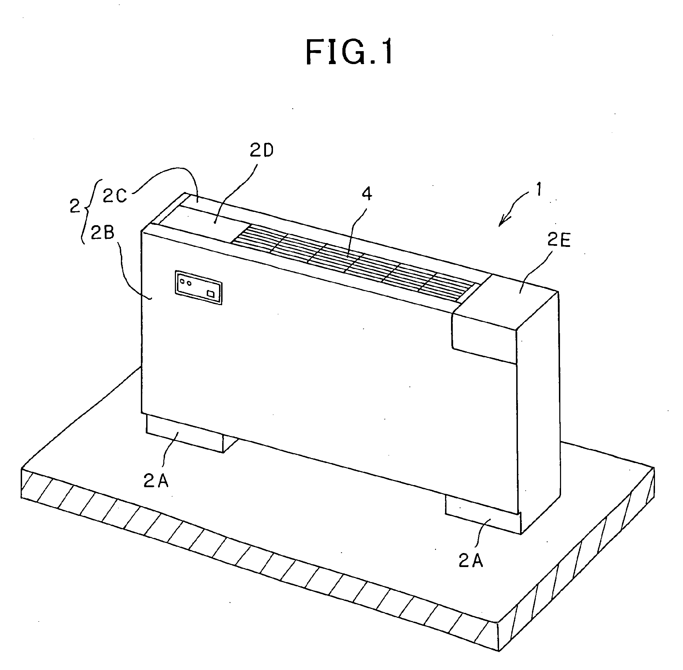

Fig. 1 shows an embodiment of an on-floor mount type air filtering apparatus 1 according to the present invention.

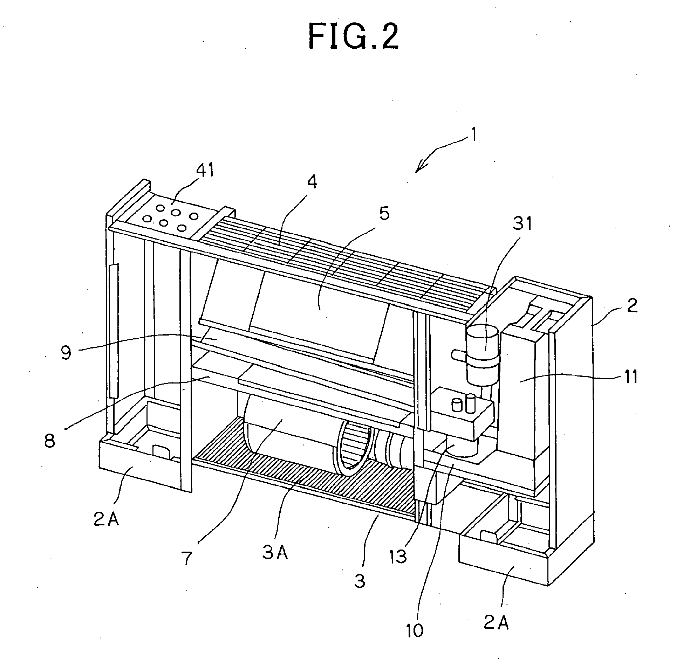

The on-floor mount type air filtering apparatus 1 has a box-type housing 2, and the housing 2 includes leg pieces 2A, a front panel 2B, and a top panel 2C. An operation lid 2D and an opening/closing lid 2E are arranged in the lateral direction. As shown in Fig. 2, an operation panel (operating member) for carrying out various operations of the on-floor mount type air filtering apparatus 1 is provided below the operation lid 2D, and a water supply tank 11 for supplementing water such as tap water or the like described later is provided below the opening/closing lid 2E so that it can be drawn out when the opening/closing lid 2E is opened. A print board (electrical circuit board portion) is disposed at the back side of the operation panel 41, and the print board carries out the driving control of the on-floor mount type air filtering apparatus 1.

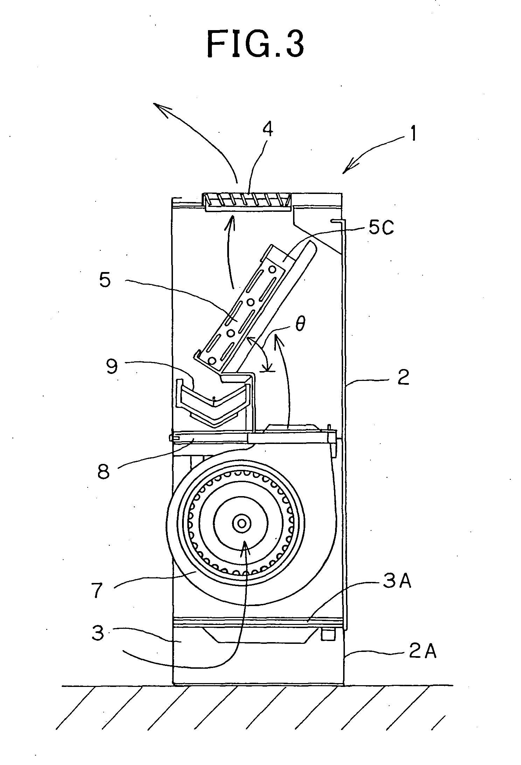

Furthermore, a horizontally-long suction port 3 is formed at the lower portion of the housing 2, and a pre-filter 3A is disposed above the suction port 3 as shown in Fig. 3. Furthermore, an air blowing fan 7 is disposed above the pre-filter 3A, and a water-retentive gas-liquid contact member 5 is disposed like a diagonal bracing (i.e., disposed on the lean) above the air blowing fan 7 as shown in Fig. 3. Furthermore, a horizontally-long air blowing port 4 is disposed above the gas-liquid contact member 5. Reference numeral 8 represents a support plate for the air blowing fan 7, and the support plate 8 is supported by the housing 2.

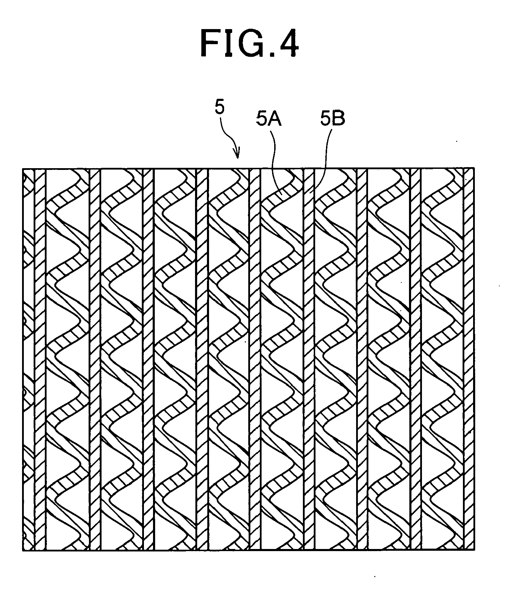

The gas-liquid contact member 5 is a filter member having a honeycomb structure, and it is designed so that the broad gas contact area can be secured, electrolytic water can be dropped through it and also it is hardly clogged. That is, as shown in Fig. 4, the gas-liquid contact member 5 comprises corrugated members 5A and flat-plate type members 5B that are joined to one another, whereby the gas-liquid contact member 5 is designed in a honeycomb structure as a whole. The members 5A and 5B are formed of materials having little reactivity to electrolytic water as described later, that is, materials that are not deteriorated by the electrolytic water, for example, they are formed of polyolefin type resin (polyethylene resin, polypropylene resin or the like), PET (polyethylene-terephthalate) resin, vinyl chloride resin, fluorinated resin (PTFE, PFA, ETFE or the like), cellulose type material, ceramics type material or the like. In this embodiment, PET resin is used for the members 5A and 5B.

The gas-liquid contact member 5 may be subjected to a hydrophilic treatment to increase of the affinity to electrolytic water. Accordingly, the water retentivity (wettability) of the electrolytic water of the gas-liquid contact member 5 can be kept excellent, and the contact between active oxygen species and indoor air can be continued for a long time. Furthermore, electrolytic water having a mildewproof action is dropped to or infiltrated into the gas-liquid contact member 5, so that it is unnecessary to coat mildewcide on the gas-liquid contact member 5 as a countermeasure of proofing mildew.

The inclination (tilt) angle θ of the gas-liquid contact member 5 shown in Fig. 3 is preferably set to 30° or more. If the inclination angle is less than 30°, the dropped electrolytic water does not flow along the slope of the gas-liquid contact member 5, but falls downwardly. Furthermore, if the inclination angle approaches to 90°, the flowing direction of air passing through the gas-liquid contact member 5 is substantially horizontal and thus it is difficult to blow the air upwardly. When the blow-out direction of the air is approached to the horizontal direction, it is impossible to blow the air far away. In this case, the air filtering apparatus is not suitable to sterilize air in a large space. It is preferable that the inclination angle θ satisfies the condition: 80° > θ > 30°, and it is more preferable that the inclination angle θ satisfies the condition: 75° > θ > 55°. In this embodiment, the inclination angle is set to about 57°.

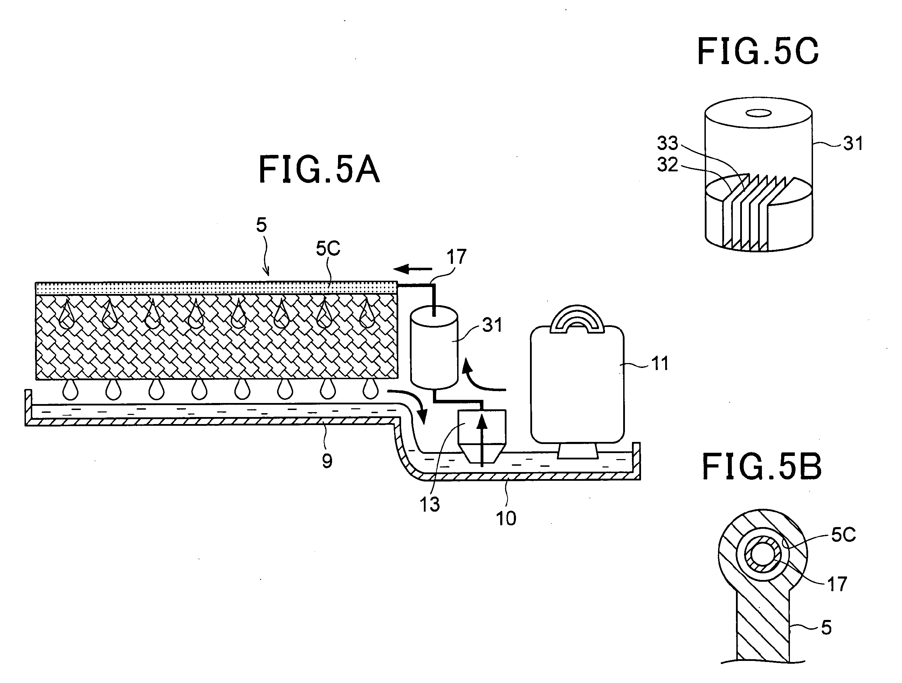

Figs. 5A to 5C show a mechanism for dropping electrolytic water to the gas-liquid contact member 5.

A water receiving tray 9 (see Fig. 3) is disposed below the gas-liquid contact member 5, and a water supplying support tray (support tray) 10 intercommunicates with the water receiving tray 9 so as to extend in the longitudinal direction of the water receiving tray. A water supply tank 11 for supplying water containing chlorine ions (the water may be tap water or the like) and a circulating pump 13 are disposed on the support tray 10. In this embodiment, the water supply tank 11 is designed to supplement water (tap water or the like) from the water supply tank 11 into the water supply tank support tray 10 when water in the water supply tank support tray 10 is reduced. When the water in the water supply tank 11 is lost, a user detaches the water supply tank 11 from the water supply tank support tray 10, supplies water (tap water or the like) into the water supply tank 11 and attaches the water supply tank 11 to the water supply tank support tray 10 again.

An electrolytic tank 31 is connected to the circulating pump 13 as shown in Fig. 5A, and an electrolytic water supply pipe 17 is connected to the electrolytic tank 31. The electrolytic water supply pipe 17 is equipped with many water spray holes (not shown) on the outer peripheral portion thereof, and inserted in a water spray box 5C formed at the upper edge portion of the gas-liquid contact member 5 as shown in Fig. 5B. In this embodiment, an electrolytic water dropping unit is constructed to have an electrolytic tank 31 and the electrolytic water supply pipe 17.

As shown in Fig. 5C, the electrolytic tank 31 has three pairs of electrodes 32 and 33, and these electrodes 32, 33 electrolyze the water flowing into the electrolytic tank 31 to generate active oxygen species when current is supplied to these electrodes 32, 33. Here, the active oxygen species means oxygen molecules having higher oxidizing activity than normal oxygen and also related substance thereof, and contain not only so-called narrowly-defined active oxygen such as superoxide anion, singlet oxygen, hydroxyl radical and hydrogen peroxide, but also so-called broadly-defined active oxygen such as ozone, hypohalous acid, etc.

In this embodiment, the electrolytic tank 31 is disposed between the outlet port of the circulating pump 13 and the inlet port of the gas-liquid contact member 5, preferably in the neighborhood of the inlet port of the gas-liquid contact member 5, and it is designed so that active oxygen species generated by electrolyzing water (tap water or the like) can be immediately supplied to the gas-liquid contact member 5.

The electrodes 32, 33 are electrode plates each of which comprises a base of Ti (titan) and a coated layer of Ir (iridium), Pt (platinum). The current value applied to the electrodes 32, 33 is set so that a predetermined concentration of free residual chlorine (for example, 1 mg/1 liter) is generated when the current density is set to 20mA (milliampere) /cm$^2$ (square centimeter), for example.

When current is supplied to tap water by the electrodes 32, 33, the following reaction occurs at the cathode:

$$4H^+ + 4e^- + (4OH^-) \rightarrow 2H_2 + (4OH^-)$$

Furthermore, the following reaction occurs at the anode:

$$2H_2O \rightarrow 4H^+ + O_2 + 4e^-$$

At the same time, chlorine ions contained water (chlorine ions are added in tap water in advance) reacts as follows:

$$2Cl^- \rightarrow Cl_2 + 2e^-$$

Furthermore, $Cl_2$ thus generated reacts with water as follows:

$$Cl_2 + H_2O \rightarrow HClO + HCl$$

In this construction, by supplying current to the electrodes 32, 33, HC10 (hypochlorous acid) having strong sterilizingpower is generated. Therefore, air is passed through the gas-liquid contact member 5 supplied with this hypochlorous acid, thereby preventing breeding of various bacteria in the gas-liquid contact member 5. Accordingly, virus, bacteria, etc. floating on air passing through the gas-liquid contact member 5 can be inactivated. Furthermore, when odor components pass through the gas-liquid contact member 5, the odor components also react with hypochlorous acid in the electrolytic water, and they are ionized and dissolved, whereby the odor components can be removed from air and the air is deodorized.

Next, the operation of this embodiment will be described.

When the operation lid 2D is opened in Fig. 1, the operation panel 41 shown in Fig. 2 is exposed. The user operates the operation panel 41 to start the operation of the on-floor mount type air filtering apparatus 1. When the operation of the on-floor mount type air filtering apparatus 1 is started, the circulating pump 13 is driven, and water (tap water) stocked in the water supply tank support tray 10 is supplied to the electrolytic tank 31.

In this electrolytic tank 31, the water (tap water) is electrolyzed by supplying current to the electrodes 32, 33 to generate electrolytic water containing active oxygen species. The generated electrolytic water is passed through the water spray holes (not shown) of the electrolytic water supply pipe 17 and sprayed into the water spray box 5C. The sprayed water enters the upper edge portion of the gas-liquid contact member 5 and gradually infiltrates downwardly.

Extra electrolytic water is collected in the water receiving tray 9. The collected electrolytic water flows into the adjacent water supply tank support tray 10, and then is stocked there. This construction is designed as a circulation system in which water is circulated by the circulating pump 13. Accordingly, when the amount of water is reduced due to vaporization or the like, a proper amount of water (tap water) is supplied through the water supply tank 11 to the water supply tank support tray 10. When the amount of water of the water supply tank 11 is reduced, the opening/closing lid 2E (see Fig. 1) is opened, and the water supply tank 11 is detached and supplemented with water (tap water).

As indicated by an arrow X, indoor air is supplied through the air blowing fan into the gas-liquid contact member 5 to which the electrolytic water infiltrates. The indoor air comes into contact with the active oxygen species infiltrated into the gas-liquid contact member 5, and then blown out to the room again. Furthermore, the gas-liquid contact member 5 may be subjected to the hydrophilic treatment to increase the affinity of the gas-liquid contact member 5 to the electrolytic water. In this case, the water retentivity (wettability) of the gas-liquid contact member 5 to the electrolytic water is kept, and the contact between the indoor air and the active oxygen species can be continued for a long time.

For example when influenza virus invades into indoor air, the active oxygen species function to break down and vanish (remove) the surface protein (spike) of the virus concerned which is indispensable for infection. When the surface protein of influenza virus is broken down, the influenza virus is not joined to a receptor which is necessary for infection of the virus concerned, so that infection can be prevented. As a result of a verification test which was made in cooperation with Sanitary Environment Research, it has been found that when air in which influenza virus invades is passed through the gas-liquid contact member 5 of this embodiment, 99% or more of the virus concerned can be removed.

In this embodiment, the air filtering apparatus is equipped with the electrolytic water dropping unit for dropping electrolytic water to the gas-liquid contact member 5, the water receiving tray 9 that is disposed below the gas-liquid contact member and receives electrolytic water passed through the gas-liquid contact member 5, and the circulating pump 13 for circulating the electrolytic water stocked in the water receiving tray 9 to the electrolytic water dropping unit. Therefore, the electrolytic water is continuously supplied through the electrolytic water dropping unit by the circulating pump 13 and air is passed through the gas-liquid contact member 5, whereby sterilization of air can be stably performed. Furthermore, by circulating the electrolytic water, the amount of water to be used can be reduced. Furthermore, a drop type is used for the electrolytic water, and thus the electrolytic water can be uniformly infiltrated to the overall area of the gas-liquid contact member 5, whereby the air passing through the gas-liquid contact member 5 can be sterilized all over.

In this embodiment, indoor air sucked from the suction port 3 provided at the lower portion of the housing 2 is brought into contact with electrolytic water dropped to the gas-liquid contact member 5, and then blown out from the blow-out port 4. therefore, even when the on-floor mount type air filtering apparatus 1 is set up in a so-called large space such as a kindergarten, an elementary/junior high/ high school, long-term care insurance facilities, a hospital or the like, indoor air which comes into contact with the electrolytic water and thus sterilized can be blown out far away in the large space, so that sterile filtration of air can be efficiently performed in the large space. Furthermore, the gas-liquid contact member 5 is arranged like a diagonal bracing (i.e., disposed on the lean) in the housing 2, and thus the depth dimension of the housing 2 can be reduced and thus the on-floor mount type sterilizing apparatus of this embodiment can be designed to be thinner as compared with a sterilizing apparatus in which the gas-liquid contact member 5 is arranged in horizontal position.

Furthermore, the gas-liquid contact member 5 is formed of PET resin or the like, that is, it is formed of material having little reactivity to electrolytic water, so that durability of the gas-liquid contact member 5 is enhanced and the lifetime thereof can be increased. In addition, since the electrolytic water is supplied in the dropping style, the electrolytic water can be uniformly infiltrated or permeated into the whole area of the gas-liquid contact member 5, and air passing through the gas-liquid contact member 5 can be perfectly subjected to sterile infiltration.

Still furthermore, according to this embodiment, the water supply tank support tray 10 intercommunicate with the water receiving tray 9 so as to extend in the longitudinal direction of the water receiving tray 9, and the circulating pump 13 and the water supply tank 11 for supplying water such as tap water or the like to the water supply tank support tray 10 are disposed on the water supply tank support tray 10. Therefore, the circulating pump 13 and the water supply tank 11 are concentratively arranged at one place, and thus a maintenance work can be easily performed. In this embodiment, the circulating pump 13 and the water supply tank 11 are arranged at one end side of the housing 2, and the operation panel 41 and the print board for carrying out various kinds of operations of the air filtering apparatus 1 are arranged at the other end side of the housing 2. Therefore, the electrical part group and the water-using part group are sectioned so as to be separated from each other. Therefore, when the water supply tank 11 is detached to carry out a water supply work of the water supply tank 11 or the like, the operation panel 41 can be prevented from getting wet.

In this embodiment, the electrolytic water containing hypochlorous acid is collected in the water receiving tray 9, and flows into the adjacent water supply tank support tray 10. Therefore, no microorganism such as virus, bacteria or the like occurs in each tray, and occurrence of slime can be prevented. Therefore, the frequency of the cleaning and maintenance of each tray can be reduced, and the labor of the maintenance, etc. can be reduced.

In the above construction, it is preferable that the concentration of the active oxygen species (hypochlorous acid) in electrolytic water is adjusted to a target concentration. The target concentration is normally set to such a value that lots of virus, etc. (for example, mold fungus) existing at the set-up place of the on-floor mount type air filtering apparatus 1 (for example, school) are inactivated. In this case, the concentration of hypochlorous acid in electrolytic water can be adjusted by changing the current flowing in the electrodes 32, 33 or the voltage applied between these electrodes 32, 33, for example. As an example, the concentration of hypochlorous acid can be changed to a high value by increasing the current flowing in the electrodes 32, 33. According to this operation, the cost can be reduced and the space can be saved without using a new apparatus by merely changing the applied voltage or the like to the electrodes.

The present invention is not limited to the above-described embodiment. For example, the air filtering apparatus of the present invention may be designed so that ozone ($O_3$) or hydrogen peroxide ($H_2O_2$) is generated as the active oxygen species. In this case, when platinum tantalum electrodes are used as the electrodes, active oxygen species can be highly efficiently and stably generated from water in which ion species are rare.

At this time, at the anode, the following reaction occurs:

$$2H_2O \rightarrow 4H^+ + O_2 + 4e^-$$

Simultaneously with the above reaction, the following reactions occur, and ozone ($O_3$) is generated.

$$3H_2O \rightarrow O_3 + 6H^+ + 6e^-$$

$$2H_2O \rightarrow O_3 + 4H^+ + 4e^-$$

Furthermore, at the cathode, the following reactions occur:

$$4H^+ + 4e^- + (4OH^-) \rightarrow 2H_2 + (4OH^-)$$

$$O_2^- + e^- + 2H^+ \rightarrow H_2O_2$$

That is, $O_2^-$ generated through the electrode reaction and $H^+$ in solution are bonded to each other to generate hydrogen peroxide ($H_2O_2$).

In this construction, ozone ($O_3$) and hydrogen peroxide ($H_2O_2$) which have strong sterilizing power are generated by supplying current to the electrodes, and electrolytic water containing ozone ($O_3$) and hydrogen peroxide ($H_2O_2$) can be created. The concentration of ozone or hydrogen peroxide in the electrolytic water is adjusted to a value suitable for inactivate target virus or the like and air is passed through the gas-liquid contact member 5 supplied with the electrolytic water having this concentration, whereby target virus, etc. floating in the air can be inactivated. Furthermore, even odor reacts with ozone or hydrogen peroxide in the electrolytic water when passing through the gas-liquid contact member 5, and ionized and dissolved in the electrolytic water, whereby the odor components are removed from the air and thus the air is deodorized.

When scale deposits on the electrode (cathode) by electrolyzing tap water, the electrical conductivity is lowered, and it is difficult to continue electrolysis.

In this case, it is effective to invert the polarities of the electrodes (the plus and minus of the electrodes are switched to each other). The scale depositing on the cathode can be removed by electrolyzing the cathode as the anode. With respect to this polarity inverting control, the inverting operation may be periodically carried out by using a timer, for example, or it may be carried out irregularly, for example, every time the operation is started. Furthermore, the increase of the electrolysis resistance (decrease of the electrolysis current, or increase of the electrolysis voltage) is detected, and the polarities may be inverted on the basis of the detection result.

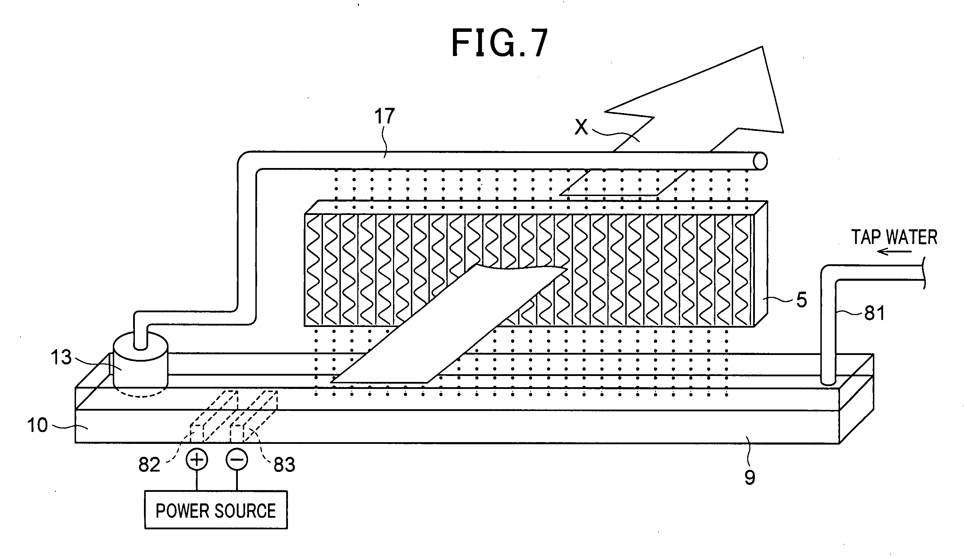

In the above embodiments, the water supply system is based on the freely detachable/attachable water supply tank 11. However, in place of the water supply tank 11, the apparatus may be connected to a water pipe 81 as shown in Fig. 7, that is, a water-pipe based water supply system for directly introducing city water may be used.

In the above embodiment, the electrolytic tank 31 is disposed at the exit side of the circulating pump 13, and the electrodes 32 and 33 are provided in the electrolytic tank 31. However, the above embodiment may be modified so that electrodes 82, 83 are disposed in the water receiving tray 9 and electrolytic water is generated in the water receiving tray 9.

Furthermore, in the above-described embodiment, the electrolytic water supply unit for dropping electrolytic water to the gas-liquid contact member 5 and infiltrating the electrolytic water into the gas-liquid contact member 5. However, the present invention is not limited to this embodiment, and electrolytic watermaybe infiltrated into the gas-liquid contact member 5 in a suction mode. In this case, a dam is provided to the water receiving tray 9 to form an electrolytic water holding area, electrolytic water is introduced to this area, the lower edge portion of the gas-liquid contact member 5 is submerged under water and then the electrolytic water is sucked up by a so-called capillary phenomenon.

## Claims

1. An on-floor mount type air filtering apparatus for subj ecting air to sterile infiltration to remove microorganisms such as virus, bacteria, etc., **characterized by** comprising:

   a gas-liquid contact member (5) that is disposed in a housing (2) of the on-floor mount type air filtering apparatus (1), and formed of material having little reactivity to electrolytic water;
   an electrolytic water dropping unit (17, 5C) for dropping electrolytic water to the gas-liquid contact member (5); and
   an air blowing fan (7) for blowing indoor air to the gas-liquid contact member (5), wherein the housing (2) has an air suction port (3) provided at the lower portion thereof and an air blow-out port (4) provided at the upper portion thereof, and the indoor air sucked from the air suction port (3) by the air blowing fan (7) is brought into contact with the electrolytic water dropped to the gas-liquid contact member (5) and blown out from the air blow-out port (4).

2. The on-floor mount type air filtering apparatus according to claim 1, further comprising an electrolytic water generating unit (31) that is equipped with electrodes and electrolyzes water by supplying current to the electrodes to generate electrolytic water containing active oxygen species.

3. The on-floor mount type air filtering apparatus according to claim 2, wherein the electrolytic water generating unit (31) is equipped with a water supply tank (11) for stocking water for electrolytic water, and the water from the water supply tank is electrolyzed to generate electrolytic water.

4. The on-floor mount type air filtering apparatus according to claim 2, wherein the electrolytic water generating unit (31) has a water pipe (81) for directly introducing tap water, and the tap water from the water pipe is electrolyzed to generate electrolytic water.

5. The on-floor mount type air filtering apparatus according to claim 2, wherein the active oxygen species contain at least any material selected from the group consisting of hypochlorous acid, ozone and hydrogen peroxide.

6. The on-floor mount type air filtering apparatus according to anyone of claims 2 to 5, wherein the polarities of the electrodes are inverted periodically or irregularly under a predetermined condition.

7. The on-floor mount type air filtering apparatus according to claim 1, further comprising a water receiving tray (9) that is disposed below the gas-liquid contact member and receives electrolytic water passed through the gas-liquid contact member, and a circulating pump (13) for circulating electrolytic water stocked in the water receiving tray to the electrolytic water dropping unit.

8. The on-floor mount type air filtering apparatus according to claim 7, wherein the electrolytic water dropping unit has electrodes (32, 33, 82, 83) for electrolyzing water and generate the electrolytic water, and the electrodes are disposed between the outlet port of the circulating pump and the inlet port of the electrolytic water of the gas-liquid contact member.

9. The on-floor mount type air filtering apparatus according to claim 7, wherein the electrolytic water dropping unit has electrodes for electrolyzing water and generating the electrolytic water, and the electrodes are arranged in the water receiving tray (9).

10. The on-floor mount type air filtering apparatus according to any one of claims 7 to 9, further comprising a support tray (10) intercommunicating with the water receiving tray (9) so as to extend in the longitudinal direction of the water receiving tray (9), and a water supply tank (11) that is disposed on the support tray and supplies water to the circulating pump (13) and the support tray (11).

11. The on-floor mount type air filtering apparatus according to claim 10, further comprising an operation unit (41) and/or an electrical circuit board portion for carrying out various kinds of operations of the air filtering apparatus, wherein the circulating pump and the water supply tank are arranged at one end side of the housing and the operation portion and/or the electrical circuit board portion is disposed at the other end side of the housing.

12. The on-floor mount type air filtering apparatus according to any one of claims 8 to 11, wherein the electrolytic water contains active oxygen species, and the active oxygen species contain at least any material selected from the group consisting of hypochlorous acid, ozone and hydrogen peroxide.

13. The on-floor mount type air filtering apparatus according to any one of claims 8 to 12, wherein the polarities of the electrodes are inverted periodically or irregularly under a predetermined condition.

14. The on-floor mount type air filtering apparatus according to claim 1, wherein the gas-liquid contact member is formed of any material selected from the group consisting of polyolefin resin, PET resin, vinyl chloride resin, fluorinated resin, cellulose-based material and ceramics-based material.

15. The on-floor mount type air filtering apparatus according to claim 14, wherein the gas-liquid contact member is subjected to a hydrophilic treatment.

16. The on-floor mount type air filtering apparatus according to any one of claims 14 and 15, wherein the electrolytic water contains active oxygen species achieved by electrolyzing water, and the active oxygen species contain at least any material selected from the group consisting of hypochlorous acid, ozone and hydrogen peroxide.

17. The on-floor mount type air filtering apparatus according to claim 16, wherein the polarities of the electrodes are inverted periodically or irregularly under a predetermined condition.

18. The on-floor mount type air filtering apparatus according to claim 1, wherein the gas-liquid contact member is disposed on the lean in the housing.

19. The on-floor mount type air filtering apparatus according to claim 1, wherein the gas-liquid contact member has a honeycomb structure.

# FIG.1

# FIG.2

# FIG.3

# FIG.4

# FIG.5C

# FIG.5A

# FIG.5B

EP 1 788 315 A2

# FIG.6

EP 1 788 315 A2

# FIG.7

EP 1 788 315 A2

TAP WATER

POWER SOURCE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8266828 A

- JP 2002181358 A